# EUROPEAN PATENT APPLICATION

(11) **EP 4 502 889 A1**
(43) Date of publication of application: **05.02.2025**
(21) Application number: 24179870.1
(22) Date of filing: 04.06.2024
(51) Int. Cl.: G06Q 10/047, G06Q 10/0834

(54) **COMPUTER-READABLE RECORDING MEDIUM STORING INFORMATION PROCESSING PROGRAM, INFORMATION PROCESSING METHOD, AND INFORMATION PROCESSING DEVICE**

(30) Priority: 31.07.2023 JP 2023124925
(71) Applicant: FUJITSU LIMITED, Kawasaki-shi, Kanagawa 211-8588 (JP)
(72) Inventor: TAKANAGA, Tatsuya, Kawasaki-shi, Kanagawa, 211-8588 (JP)
(74) Representative: Hoffmann Eitle

(57) **Abstract**

A program for causing a computer to execute processing including: specifying a package to be delivered by a first moving body from a first base to a second base in a first plan; specifying a third base where delivery of the package from the first base to the third base is allocatable to a second moving body in the first plan and where delivery of the package from the third base to the second base is allocatable to a third moving body in the first plan; and creating a second plan by replacing the delivery of the package from the first base to the second base by the first moving body with the delivery of the package from the first base to the third base by the second moving body and the delivery of the package from the third base to the second base by the third moving body.

## Description

### FIELD

The embodiment discussed herein is related to an information processing program, an information processing method, and an information processing device.

### BACKGROUND

Delivery includes single transportation in which a moving body such as a single truck handles a single package and relay transportation in which a plurality of moving bodies handles a single package with a relay point as a boundary. For example, in a case where a package is carried from a point A to a point C via a point B as a relay point, the same moving body carries the package between the points A and B and between the points Band C in the single transportation. On the other hand, in the relay transportation, a moving body that carries the package between the points A and B is different from a moving body that carries the package between the points Band C. Introduction of the relay transportation has been activated due to demands for shortening working hours or the like.

In such relay transportation, when the package is carried between two bases including the relay point using the moving body, there is a delivery plan problem of the relay transportation such that which package is allocated to which moving body so as to carry all the packages within a predetermined time. Typically, a solution space of the delivery plan problem is completely expressed by a combination of allocations of packages and moving bodies. However, in a case where the relay transportation is considered, the solution space is exponentially widened. Therefore, it is difficult to use a general method for solving the delivery plan problem for a delivery plan problem of the relay transportation. Therefore, in the delivery plan problem of the relay transportation, as a realistic solving method, a heuristic method is often used for repeating processing for changing and evaluating a part of the delivery route while changing the part to be changed.

Furthermore, in the real world, for reasons such as the demand for shortening the working hours or cost reduction, there is a demand for reducing the total number of moving bodies in package transportation management or the like. As a technology for service reduction, there is a service reduction determination technology for determining whether or not it is possible to perform service reduction, based on whether or not allocation can satisfy constraint conditions such as a maximum loading amount of the moving body or a delivery deadline in a case where a package allocated to a service reduction target moving body is allocated to another moving body.

As the technology regarding the relay transportation, the following technologies exist. For example, a technology has been proposed for storing candidates of transport route connecting relay bases that satisfy constraint conditions regarding logistics such as the number of times of connections or a connection method as a transport route pattern and searching for a route with reference to the transport route pattern stored at the time when the transport route is searched. Furthermore, a technology has been proposed for setting a plurality of relay station candidates and determining a relay station using an index representing a degree of a condition included in a work before a package is transferred at the relay station candidate. Furthermore, a technology has been proposed for performing a search by relaxing a condition of an edge connected to an important node in a forward search from a source node and a backward search from a target node, in moving cost calculation of the relay transportation.

Japanese Laid-open Patent Publication No. 08-235263, Japanese Laid-open Patent Publication No. 2022-138271, and U.S. Patent Application Publication No. 2011/0251789 are disclosed as related art.

### SUMMARY

### TECHNICAL PROBLEM

However, in a typical service reduction determination technology, single transportation that is a service reduction target is replaced with another single transportation, and service reduction using relay transportation is not considered. Although it is considered to use a relay point when the service reduction is realized, it is difficult to appropriately determine the service reduction by the relay transportation even if the typical service reduction determination technology is applied as it is, and it is difficult to realize efficient delivery.

Furthermore, any one of the technology for searching for the route by storing the transport route pattern that satisfies the constraint condition, the technology for determining the relay station using the index, and the technology for performing the search by relaxing the condition of the edge connected to the important node does not determine whether or not it is possible to perform the service reduction using the relay transportation. Therefore, with any technology, it is difficult to appropriately determine the service reduction by the relay transportation, and it is difficult to realize efficient delivery.

The disclosed technology has been made in view of the above, and an object of the disclosed technology is to provide an information processing program, an information processing method, and an information processing device that realize efficient delivery.

### SOLUTION TO PROBLEM

According to an aspect of the embodiments, there is provided an information processing program including instructions which, when executed by a computer, cause the computer to execute processing including: specifying a package to be delivered by a first moving body from a first base to a second base in a first delivery plan; specifying a third base other than the first base and the second base and where delivery of the package from the first base to the third base is allocatable to a second moving body included in the first delivery plan and where delivery of the package from the third base to the second base is allocatable to a third moving body included in the first delivery plan; and creating a second delivery plan by replacing the delivery of the package from the first base to the second base by the first moving body with the delivery of the package from the first base to the third base by the second moving body and the delivery of the package from the third base to the second base by the third moving body.

### ADVANTAGEOUS EFFECTS OF INVENTION

In one aspect, the embodiment can realize efficient delivery.

### BRIEF DESCRIPTION OF DRAWINGS

FIG. 1 is a block diagram of an information processing device according to an embodiment;
FIG. 2 is a diagram for describing a relay candidate table;
FIG. 3 is a diagram illustrating an outline of allocation determination processing by a service reduction processing unit;
FIG. 4 (i.e., FIGs. 4A and 4B) is a flowchart of service reduction determination processing by the information processing device according to the embodiment;
FIG. 5 is a diagram illustrating an example of a result of service reduction by the information processing device according to the embodiment;
FIG. 6 is a diagram illustrating an effect of narrowing in a case where the relay candidate table is used; and
FIG. 7 is a hardware configuration diagram of the information processing device.

### DESCRIPTION OF EMBODIMENTS

Hereinafter, an embodiment of an information processing program, an information processing method, and an information processing device disclosed in the present application will be described in detail with reference to the drawings. Note that the following embodiment does not limit the information processing program, the information processing method, and the information processing device disclosed in the present application.

### [First Embodiment]

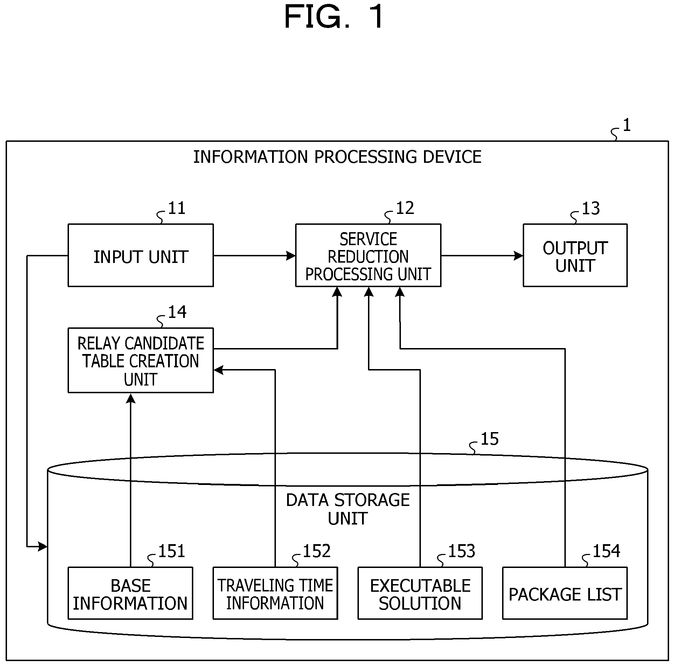

FIG. 1 is a block diagram of an information processing device according to an embodiment. An information processing device 1 according to the present embodiment creates a new delivery plan in which transportation of a package by a moving body designated in a predetermined delivery plan is replaced with relay transportation by another moving body and the number of services of the moving body is reduced. Hereinafter, details of the information processing device 1 will be described. In the following description, a truck will be described as an example of the moving body. As illustrated in FIG. 1, the information processing device 1 includes an input unit 11, a service reduction processing unit 12, an output unit 13, a relay candidate table creation unit 14, and a data storage unit 15.

The input unit 11 includes a keyboard, a mouse, or the like. A user inputs information into the information processing device 1 using the input unit 11. For example, the user inputs base information 151, traveling time information 152, an executable solution 153, and a package list 154 using the input unit 11 and stores the base information 151, the traveling time information 152, the executable solution 153, and the package list 154 in the data storage unit 15. Furthermore, the user inputs information regarding a truck to be a service reduction target, using the input unit 11. Hereinafter, the truck to be the service reduction target is referred to as a "service reduction target truck".

In the base information 151, information regarding a base to be loading or unloading places of the truck including a package pick-up place, a delivery place, a package delivery and receipt place, or the like that can be used when the delivery plan is created. The base may include a gas station, a truck station, or the like, that can be used as a relay base, in addition to offices. For example, in a case of delivery in Japan, bases spreading all over Japan are registered in the base information 151.

In the traveling time information 152, a general traveling time between the bases is registered. The traveling time is calculated, for example, from an average of past statistical information or the like. In the traveling time information 152, traveling times for all combinations of two bases are registered.

The executable solution 153 is an example of a delivery plan that can be executed and appropriately drawn from an availability situation of the truck, a package amount, or the like and is a delivery plan used to complete delivery of all given packages. For the executable solution 153, a delivery plan that is actually operated can be used.

The package list 154 is information associated with information regarding a truck that delivers the package and two bases to be a start point and an end point of delivery by the truck in the executable solution 153, for all the packages to be delivered. That is, in the package list 154, all packages to be delivered by a specific truck between specific bases are registered in association with information regarding the specific truck and the specific two bases.

The data storage unit 15 is a storage device that stores data. The data storage unit 15 stores and holds the base information 151, the traveling time information 152, the executable solution 153, and the package list 154 input by the user using the input unit 11.

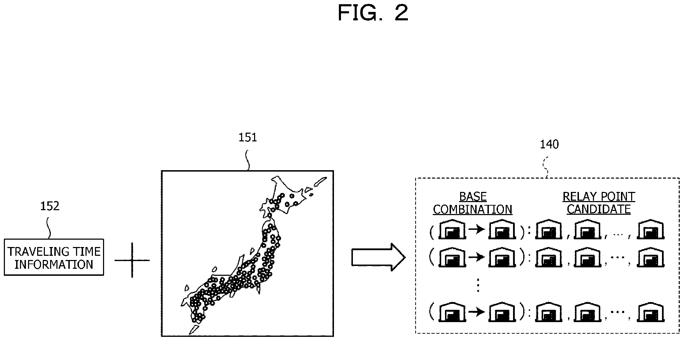

The relay candidate table creation unit 14 executes the following processing in advance, before a new delivery plan is created due to service reduction. The relay candidate table creation unit 14 acquires the base information 151 and the traveling time information 152 from the data storage unit 15. FIG. 2 is a diagram for describing a relay candidate table. As illustrated in FIG. 2, the relay candidate table creation unit 14 creates a relay candidate table 140 from the base information 151 and the traveling time information 152.

Hereinafter, a specific example of the creation of the relay candidate table 140 by the relay candidate table creation unit 14 will be described. Here, a base set including all the bases registered in the base information 151 is set as N. Then, any two bases among the bases are represented as a base i and a base j ∈ N.

The relay candidate table creation unit 14 acquires the two bases i and j from the base information 151. Then, the relay candidate table creation unit 14 sets the base i as a start point and the base j as an end point and selects one base k e N to form a route from the base i to the base j relaying a base k, from the base information 151.

Next, the relay candidate table creation unit 14 acquires Mij that is a traveling time from the base i to the base j, from the traveling time information 152. Furthermore, the relay candidate table creation unit 14 acquires Mik that is a traveling time from the base i to the base k and Mkj that is a traveling time from the base k to the base j, from the traveling time information 152. Then, the relay candidate table creation unit 14 calculates a difference between a traveling time in a case where relay transportation is not performed and a traveling time in a case where the relay transportation is performed, as Mik + Mkj - Mij.

Then, in a case where the calculated difference is equal to or less than a predetermined relay point candidate threshold, the relay candidate table creation unit 14 sets the base k as a relay point candidate between the bases including the bases i and j. That is, if a time needed for relay transportation using the base k as a relay point is not equal to or longer than the relay point candidate threshold as compared with a time needed for single transportation from the base i to the base j, the relay candidate table creation unit 14 sets the base k as the relay point candidate.

As the relay point candidate threshold is increased, the number of bases that can be set as the relay point candidate increases, and a degree of freedom of the delivery plan increases. However, there is a possibility that a time for the delivery increases. Conversely, as the relay point candidate threshold is decreased, the number of bases that can be set as the relay point candidate decreases, and the degree of freedom of the delivery plan decreases. However, it is possible to suppress the time for the delivery to be short.

The relay candidate table creation unit 14 determines whether or not all the bases other than the bases i and j are set as the relay point candidates between the bases including the bases i and j. Then, the relay candidate table creation unit 14 sorts the bases set as the relay point candidates between the bases including the bases i and j in ascending order of the traveling time, and registers the bases in the relay candidate table 140.

The relay candidate table creation unit 14 extracts the relay point candidate as described above and registers the relay point candidate in the relay candidate table 140, for all the combinations of the two bases included in the bases registered in the base information 151. As a result, the relay candidate table creation unit 14 creates the relay candidate table 140 illustrated in FIG. 2. Here, the relay candidate table creation unit 14 may use a relay point candidate in a case where the base i is set as the start point and the base j is set as the end point, as a relay point candidate in a case where the base j is set as the start point and the base i is set as the end point.

For example, in a case of the delivery in Japan, the relay candidate table creation unit 14 registers combinations such as "from Tokyo to Osaka" or "from Yokohama to Hakodate" as the base combination of the start point and the end point illustrated in FIG. 2, in the relay candidate table 140. Then, the relay candidate table creation unit 14 extracts, for example, Aichi, Shizuoka, or the like as the relay point candidates for "from Tokyo to Osaka" and registers Aichi, Shizuoka, or the like in the relay candidate table 140 as the relay point candidates illustrated in FIG. 2. Furthermore, the relay candidate table creation unit 14 extracts, for example, Mito, Sendai, or the like as the relay point candidates for "from Yokohama to Hakodate" and registers Mito, Sendai, or the like in the relay candidate table 140 as the relay point candidates illustrated in FIG. 2.

Thereafter, the relay candidate table creation unit 14 outputs the created relay candidate table 140 to the service reduction processing unit 12. However, the relay candidate table creation unit 14 may store the created relay candidate table 140 in the data storage unit 15, and the service reduction processing unit 12 may acquire the relay candidate table 140 stored in the data storage unit 15.

Here, the relay point where the package of the service reduction target truck can be allocated to another truck corresponds to an example of a "third base", and the relay point candidate corresponds to an example of a "candidate of the third base". That is, the relay candidate table creation unit 14 lists the candidates of the third base.

Returning to FIG. 1, the description will be continued. The service reduction processing unit 12 receives input of designation of the service reduction target truck from the input unit 11. Furthermore, the service reduction processing unit 12 acquires the executable solution 153 and the package list 154 from the data storage unit 15. Moreover, the service reduction processing unit 12 receives input of the relay candidate table 140 from the relay candidate table creation unit 14.

Next, the service reduction processing unit 12 acquires a target package list that is a list of packages handled by the service reduction target truck in the executable solution 153, from the package list 154. Here, the executable solution 153 corresponds to an example of a "first delivery plan". Furthermore, the service reduction target truck corresponds to an example of a "first moving body". Furthermore, the base that is set as the start point of the delivery of the package by the service reduction target truck corresponds to a "first base", and the base that is set as the end point corresponds to a "second base". That is, the service reduction processing unit 12 specifies a package to be delivered from the first base to the second base by the first moving body in the first delivery plan.

Then, the service reduction processing unit 12 executes allocation determination processing for determining whether or not each package registered in the target package list can be allocated to the another truck using the relay transportation. Hereinafter, a package to be determined to be rearranged to the another truck will be described as a "rearranged package".

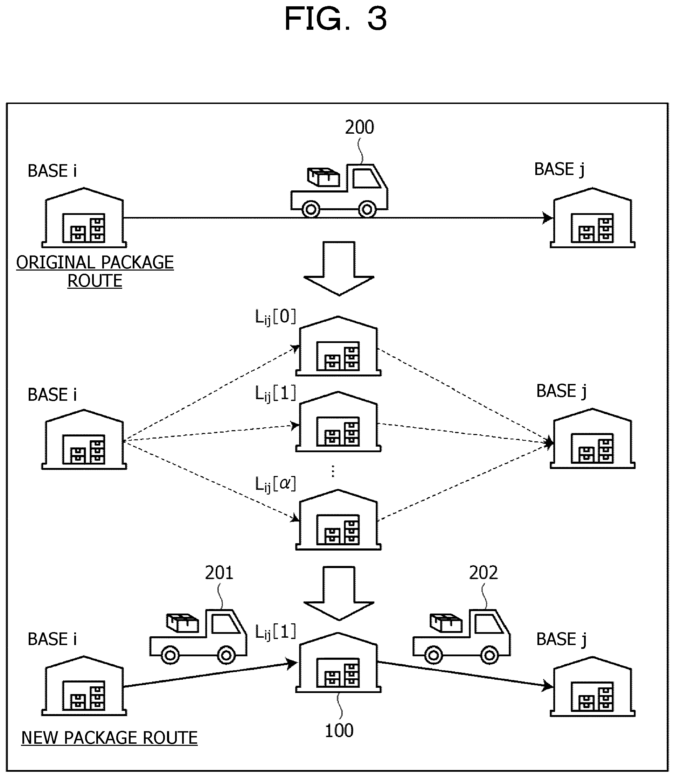

FIG. 3 is a diagram illustrating an outline of the allocation determination processing by the service reduction processing unit. FIG. 3 illustrates a case where a truck 200 that performs delivery from the base i to the base j, as an original route of a package, is the service reduction target truck.

For example, the service reduction processing unit 12 acquires relay point candidates Lᵢⱼ [0] to Lᵢⱼ [α] between the bases i and j from the relay candidate table 140. Then, for example, the service reduction processing unit 12 specifies a truck 201 to which delivery of the rearranged package from the base i to the relay point candidate Lᵢⱼ [1] can be allocated, for the relay point candidate Lᵢⱼ [1], among the relay point candidates Lᵢⱼ [0] to Lᵢⱼ [α]. Furthermore, the service reduction processing unit 12 specifies a truck 202 to which delivery of the rearranged package from the relay point candidate Lᵢⱼ [1] to the base j can be allocated.

Then, the service reduction processing unit 12 determines to allocate the rearranged package to the trucks 201 and 202 using the relay point candidate Lᵢⱼ [1] as the relay point and determines a new package route for the rearranged package. In a case where the rearranged packages can be allocated to the other two trucks via the relay points for all the packages to be delivered by the service reduction target truck, the service reduction processing unit 12 determines that the number of service reduction target trucks can be reduced.

Hereinafter, the allocation determination processing by the service reduction processing unit 12 will be described in more detail. The service reduction processing unit 12 acquires a relay point candidate set for between the two bases where the rearranged package is carried by the service reduction target truck from the relay candidate table 140. Then, the service reduction processing unit 12 selects one relay point candidate from the relay point candidate set.

Next, the service reduction processing unit 12 divides a route between the two bases where the rearranged package is carried into a first half route from the base serving as the start point of the route to the selected relay point candidate and a latter half route from the selected relay point candidate to the base serving as the end point of the route. Hereinafter, the service reduction processing unit 12 handles delivery of the rearranged package in the first half route and delivery of the rearranged package in the latter half route as independent deliveries. That is, it can be said that the service reduction processing unit 12 handles the rearranged package in the first half route and the rearranged package in the latter half route as different packages.

Next, the service reduction processing unit 12 generates a truck list in the first half route that is a list of allocation candidate trucks to be candidates to which the delivery of the rearranged package in the first half route is allocated. Furthermore, the service reduction processing unit 12 generates a truck list in the latter half route that is a list of allocation candidate trucks in the latter half route. The service reduction processing unit 12 sorts order of the trucks such that a truck that is preferentially allocated is set to be higher in both of the truck list in the first half route and the truck list in the latter half route.

Here, an example of a method for extracting the allocation candidate truck and for prioritizing the allocation candidate truck will be described. The service reduction processing unit 12 extracts a truck that passes through the base serving as the start point and the base serving as the end point of the delivery of the rearranged package in the first half route or the latter half route in the executable solution 153, from among the trucks included in the executable solution 153, as a first-group truck that can be an allocation candidate. That is, the first-group trucks are a set of trucks to which the rearranged package can be allocated without adding a route. Furthermore, the service reduction processing unit 12 extracts a truck that passes through one of the base serving as the start point or the base serving as the end point of the rearranged package in the executable solution 153, from among the trucks included in the executable solution 153, as a second-group truck that can be an allocation candidate. That is, the second-group trucks are a set of trucks to which the rearranged package can be allocated by adding the route.

Then, the service reduction processing unit 12 prioritizes the allocation of the rearranged package to the first-group truck with respect to the allocation of the rearranged package to the second-group truck. Moreover, the service reduction processing unit 12 prioritizes a truck having a short traveling time between the base serving as the start point and the base serving as the end point of the delivery of the rearranged package among the first-group trucks. Furthermore, regarding the second-group trucks, in a case where a base is added so as to pass through the base serving as the start point and the base serving as the end point, the service reduction processing unit 12 adds the base to form the shortest route and prioritizes a truck having a smaller increase of the traveling time as possible after adding the base.

For example, in a case where the rearranged package is carried from Tokyo to Osaka, the service reduction processing unit 12 extracts a truck including a route from Tokyo to Osaka in the executable solution 153 as the first-group truck. Moreover, the service reduction processing unit 12 arranges the trucks from the head of the list in ascending order of the traveling time between Tokyo and Osaka, among the trucks including the route from Tokyo to Osaka in the executable solution 153.

Next, the service reduction processing unit 12 extracts a truck including the route that passes through Tokyo or Osaka in the executable solution 153 as the second-group truck. Then, the service reduction processing unit 12 adds a base that is one of Tokyo or Osaka and where each second-group truck does not pass through so as to form the shortest route in a case where the base is added. For example, in a case where there is a truck that travels from Tokyo to Kyoto via Nagoya, in a case where a route from Tokyo to Kyoto via Nagoya, and then, via Osaka is the shortest route passing through Osaka, the service reduction processing unit 12 adds a base in Osaka between Nagoya and Kyoto and changes the route. Moreover, the service reduction processing unit 12 arranges the trucks after the first-group truck in the list in ascending order of an increase in the traveling time between the routes before and after the change. For example, in a case where the base in Osaka is added between Nagoya and Kyoto, the service reduction processing unit 12 calculates the increase in the traveling time by subtracting the traveling time from Nagoya to Kyoto from the traveling time from Nagoya to Kyoto via Osaka.

As described above, the service reduction processing unit 12 extracts and prioritizes the allocation candidate truck and generates the truck lists in the first half route and the latter half route. Next, the service reduction processing unit 12 selects a truck from the head of the truck list in the first half route one by one. Then, the service reduction processing unit 12 determines whether or not it is possible to allocate the rearranged package to the selected truck in the first half route.

Here, the service reduction processing unit 12 determines whether or not it is possible to allocate the rearranged package based on a predetermined condition. The predetermined condition is, for example, a delivery time frame or a loading amount of a truck. The delivery time frame is determined without inconsistency between the first half route and the latter half route. For example, the service reduction processing unit 12 may determine the delivery time frame in the first half route and the delivery time frame in the latter half route, based on an average value of the delivery time frame from the base serving as the start point of the rearranged package to the base serving as the end point. Specifically, in a case where the delivery time frame from the base serving as the start point to the base serving as the end point is from 9:00 to 24:00, the service reduction processing unit 12 may set the delivery time frame of the first half route from 9:00 to 16:30 and set the delivery time frame of the latter half route from 16:30 to 24:00. However, this method for setting the time frame is an example, and the service reduction processing unit 12 may use other determination methods as long as a delivery time in the first half route and a delivery time in the latter half route can be determined without inconsistency.

In a case where it is difficult to allocate the rearranged package to the selected truck in the first half route, the service reduction processing unit 12 selects a next truck in the first half route from the truck list in the first half route. Thereafter, the service reduction processing unit 12 repeats the determination on whether or not it is possible to allocate the rearranged package in the first half route to the selected truck.

On the other hand, in a case where it is possible to allocate the rearranged package to the selected truck in the first half route, the service reduction processing unit 12 selects the trucks from the head of the truck list in the latter half route one by one.

Then, similarly to a case of the first half route, the service reduction processing unit 12 determines whether or not it is possible to allocate the rearranged package to the selected truck in the latter half route. In a case where it is possible to allocate the rearranged package to the selected truck in the latter half route, the service reduction processing unit 12 determines that the rearranged package of the service reduction target truck can be allocated to the trucks to which the allocation is determined for each of the first half route and the latter half route.

On the other hand, in a case where it is difficult to allocate the rearranged package to the selected truck in the latter half route, the service reduction processing unit 12 repeats to specify a truck to which the rearranged package can be allocated, from among the trucks registered in the truck list in the latter half route. In a case where it is not possible to allocate the rearranged package to any truck in the truck list in the latter half route, the service reduction processing unit 12 selects a next truck from the truck list in the first half route, allocates the rearranged package, and determines to allocate the rearranged package to the truck in the latter half route according to that.

In a case where the truck in the first half route and the truck in the latter half route to which the rearranged package of the service reduction target truck is allocated are not found, the service reduction processing unit 12 determines that it is difficult to reduce the number of services of the service reduction target truck. Then, the service reduction processing unit 12 notifies the output unit 13 of that it is difficult to reduce the number of services of the service reduction target truck and ends the allocation determination processing.

On the other hand, in a case where the truck in the first half route and the truck in the latter half route to which the rearranged packages of the service reduction target truck are allocated are found, the service reduction processing unit 12 determines to perform rearranged package allocation on a next package in the package list 154.

In a case where all the packages registered in the target package list can be allocated to the another trucks, the service reduction processing unit 12 determines to reduce the number of services of the service reduction target truck. Then, a delivery plan in which delivery of each package delivered by the service reduction target truck is allocated to the another truck determined as an allocation destination is created. Thereafter, the service reduction processing unit 12 notifies the output unit 13 of that it is possible to reduce the number of services of the service reduction target truck and a new delivery plan in which the number of service reduction target trucks is reduced.

Here, the delivery of the rearranged package in the first half route corresponds to an example of "delivery of the package from the first base to the third base". Furthermore, the delivery of the rearranged package in the latter half route corresponds to an example of "delivery of the package from the third base to the second base". Moreover, the truck to which the rearranged package is allocated in the first half route corresponds to an example of a "second moving body", and the truck to which the rearranged package is allocated in the latter half route corresponds to an example of a "third moving body".

That is, the service reduction processing unit 12 specifies the third base where the delivery of the package from the first base to the third base can be allocated to the second moving body included in the first delivery plan and the delivery of the package from the third base to the second base can be allocated to the third moving body included in the first delivery plan. Moreover, the service reduction processing unit 12 creates a second delivery plan by replacing the delivery of the package from the first base to the second base by the first moving body with the delivery of the package from the first base to the third base by the second moving body and the delivery of the package from the third base to the second base by the third moving body.

Furthermore, the service reduction processing unit 12 according to the present embodiment specifies the third base using the second moving body including at least the first base or the third base or a combination of the first base and the third base in a delivery route in the first delivery plan and the third moving body including at least the third base or the second base or a combination of the third base and the second base in a delivery route in the first delivery plan.

Returning to FIG. 1, the description will be continued. The output unit 13 receives the notification indicating that it is difficult to reduce the number of services of the service reduction target truck or a notification indicating that it is possible to reduce the number of services of the service reduction target truck and a new delivery plan in which the number of service reduction target trucks is reduced, from the service reduction processing unit 12. Then, the output unit 13 notifies the user of a service reduction determination result, by outputting and displaying the notification indicating that it is difficult to reduce the number of services of the service reduction target truck or the notification indicating that it is possible to reduce the number of services of the service reduction target truck and the new delivery plan in which the number of service reduction target trucks is reduced, on a monitor or the like.

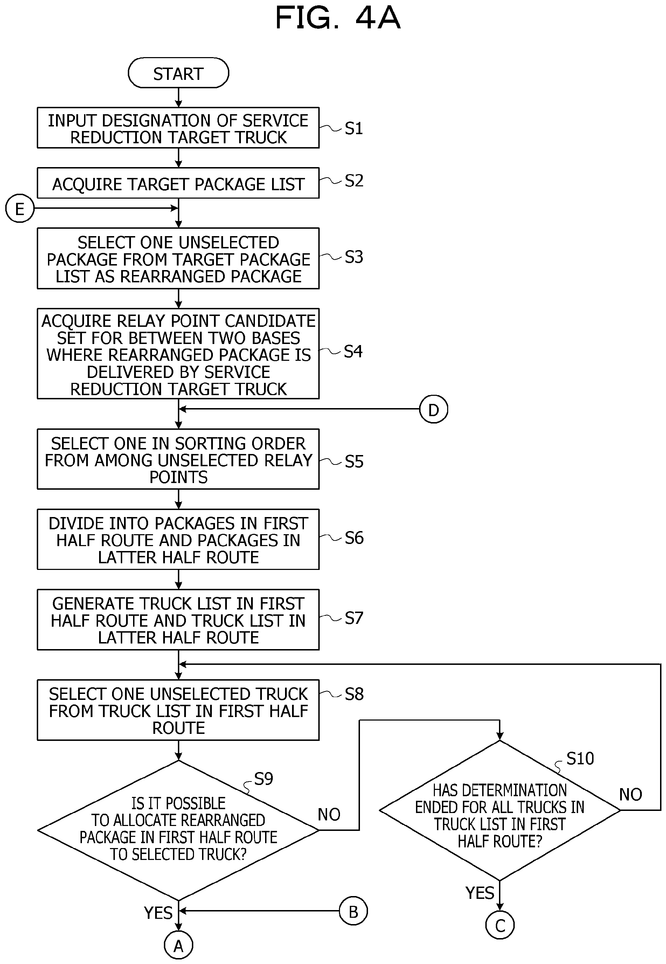

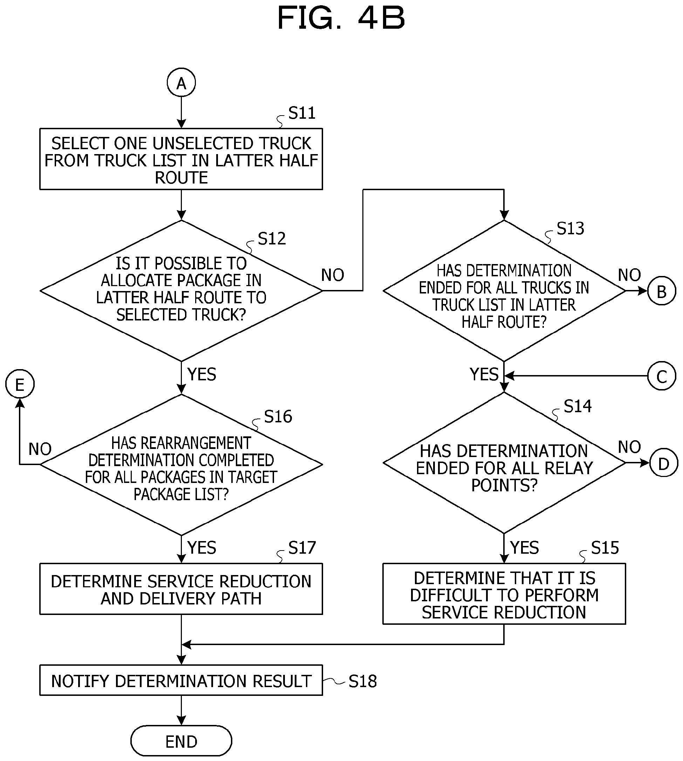

FIG. 4 (i.e., FIGs. 4A and 4B) is a flowchart of service reduction determination processing by the information processing device according to the embodiment. Next, a flow of the service reduction determination processing by the information processing device 1 according to the embodiment will be described with reference to FIG. 4.

The service reduction processing unit 12 receives the input of the information regarding the truck to be the service reduction target from the input unit 11 (step S1). Then, the service reduction processing unit 12 acquires the executable solution 153 and the package list 154 from the data storage unit 15. Furthermore, the service reduction processing unit 12 receives the input of the relay candidate table 140 from the relay candidate table creation unit 14.

Next, the service reduction processing unit 12 acquires the target package list that is a list of packages handled by the service reduction target truck from the package list 154 (step S2).

Next, the service reduction processing unit 12 selects one unselected package from among the packages registered in the target package list, as the rearranged package (step S3).

The service reduction processing unit 12 acquires the relay point candidate set for between the two bases where the rearranged package is delivered by the service reduction target truck from the relay candidate table 140 (step S4).

Next, the service reduction processing unit 12 selects one relay point candidate in sorting order from among unselected relay point candidates included in the relay point candidate set (step S5).

Next, the service reduction processing unit 12 divides the route between the two bases where the rearranged package is delivered into the first half route and the latter half route and divides the rearranged packages into the packages in the first half route and the packages in the latter half route (step S6).

Next, the service reduction processing unit 12 generates the truck list in the first half route that is the list of the allocation candidate trucks to be candidates of the allocation destinations of the rearranged packages regarding the first half route. Furthermore, the service reduction processing unit 12 generates the truck list in the latter half route that is the list of the allocation candidate trucks regarding the latter half route (step S7). Here, the service reduction processing unit 12 sorts the trucks such that a truck that is preferentially allocated is set to be higher in both of the truck list in the first half route and the truck list in the latter half route.

Next, the service reduction processing unit 12 selects one unselected truck in the sorting order of the truck list in the first half route (step S8).

Then, the service reduction processing unit 12 determines whether or not it is possible to allocate the rearranged package in the first half route to the truck selected based on a previously given condition (step S9).

In a case where it is difficult to allocate the rearranged package in the first half route to the selected truck (step S9: No), the service reduction processing unit 12 determines whether or not the determination on whether or not it is possible to allocate the rearranged package in the first half route has ended for all the trucks in the truck list in the first half route (step S10). In a case where there is a remaining truck for which it has not been determined whether or not it is possible to allocate the rearranged package in the first half route in the truck list in the first half route (step S10: No), the service reduction processing unit 12 returns to step S8.

On the other hand, in a case where the determination on whether or not it is possible to allocate the rearranged package in the first half route has ended for all the trucks in the truck list in the first half route (step S10: Yes), the service reduction processing unit 12 proceeds to step S14.

On the other hand, in a case where it is possible to allocate the rearranged package in the first half route to the selected truck (step S9: Yes), the service reduction processing unit 12 selects one unselected truck in the sorting order of the truck list in the latter half route (step S11).

Then, the service reduction processing unit 12 determines whether or not it is possible to allocate the rearranged package in the latter half route to the truck selected based on the previously given condition (step S12).

In a case where it is difficult to allocate the rearranged package in the latter half route to the selected truck (step S12: No), the service reduction processing unit 12 determines whether or not the determination on whether or not it is possible to allocate the rearranged package in the latter half route has ended for all the trucks in the truck list in the latter half route (step S13). In a case where there is a remaining truck for which it has not been determined whether or not it is possible to allocate the rearranged package in the latter half route in the truck list in the latter half route (step S13: No), the service reduction processing unit 12 returns to step S 11.

On the other hand, in a case where the determination on whether or not it is possible to allocate the rearranged package in the latter half route has ended for all the trucks in the truck list in the latter half route (step S13: Yes), the service reduction processing unit 12 proceeds to step S14.

Thereafter, the service reduction processing unit 12 determines whether or not the determination on whether or not it is possible to allocate each package of the service reduction target truck has ended for all the relay points (step S14). In a case where there is a remaining relay point for which it has not been determined whether or not to allocate each package of the service reduction target truck (step S14: No), the service reduction processing unit 12 returns to step S5.

On the other hand, in a case where the determination on whether or not to allocate each package of the service reduction target truck has ended for all the relay points (step S14: Yes), the service reduction processing unit 12 determines that it is difficult to reduce the number of services of the service reduction target truck (step S15). Then, the service reduction processing unit 12 proceeds to step S18.

On the other hand, in a case where it is possible to allocate the rearranged package in the latter half route to the selected truck (step S12: Yes), the service reduction processing unit 12 determines whether or not the determination on the allocation to the another truck has been completed for all the packages in the target package list (step S16). In a case where there is a remaining package, for which the allocation to the another truck has not been determined, in the target package list (step S16: No), the service reduction processing unit 12 returns to step S3.

On the other hand, in a case where the determination on the allocation to the another truck has been completed for all the packages in the target package list (step S16: Yes), the service reduction processing unit 12 determines to reduce the number of services of the service reduction target truck. Furthermore, the service reduction processing unit 12 allocates each package to be delivered by the service reduction target truck to the another truck determined as the allocation destination and determines a new delivery path (step S17). Then, the service reduction processing unit 12 creates a delivery plan using the new delivery path obtained by reducing the number of service reduction target trucks.

Thereafter, the service reduction processing unit 12 notifies the user of a determination result indicating whether or not it is possible to reduce the number of services of the service reduction target truck via the output unit 13 (step S18). In a case of notifying that it is possible to reduce the number of services of the service reduction target truck, the service reduction processing unit 12 provides the delivery plan using the new delivery path obtained by reducing the number of service reduction target trucks, to the user.

Here, in the above description, the information processing device 1 has realized the service reduction by replacing the single transportation of the package using the single route by the service reduction target truck with the relay transportation for performing delivery using the two trucks and the two routes. By generalizing this, the information processing device 1 can replace the single transportation for delivering the package using the single route by the service reduction target truck with the relay transportation for performing the delivery using the plurality of trucks (three or more trucks) and using the plurality of routes.

For example, the information processing device 1 can perform allocation to the three or more trucks and divide the single route into the plurality of routes, by recursively repeating a procedure for creating a relay delivery route by dividing the single route into the two routes described above.

A specific example will be exemplified and described. A function used to divide a single route for delivering a package α from the base i to the base j into a route for delivering a package β from the base i to the base k and a route for delivering the package β from the base i to the base k is set as g (α, i, j) = (β, i, k) (γ, k, j). Here, a case will be described where one route of the single route is divided into three routes using three trucks. The information processing device 1 executes processing represented by g (α, i, j) = (β, i, k) (γ, k, j) and divides the single route into two routes using two trucks. Next, the information processing device 1 can divide the original single route into three routes using three trucks, by executing the processing represented by the function g again, on one of the packages β or Y.

In this way, when the service reduction of the single transportation of the service reduction target truck is considered, the information processing device 1 can replace the single transportation with the relay transportation using one or more and an appropriate number of relay points and can create a new delivery route by determining whether or not it is possible to reduce the number of services of the service reduction target truck.

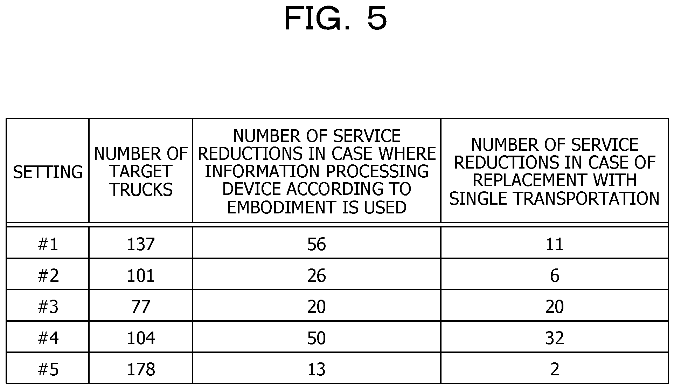

FIG. 5 is a diagram illustrating an example of a result of service reduction by the information processing device according to the embodiment. Here, FIG. 5 illustrates a result of a case where numerical experiments are performed on problem settings #1 to #5 for the purpose of transferring the package handled by the service reduction target truck to the another truck so as to perform the service reduction and reduce the total number of used trucks.

In a case where the number of target trucks in the executable solution is 137 in the problem setting #1 and the information processing device 1 according to the present embodiment is used, the number of reduced services has been 56. On the other hand, in the method for replacing with the single transportation, the number of reduced services has been 11. Furthermore, in a case where the number of target trucks in the executable solution is 101 in the problem setting #2 and the information processing device 1 according to the present embodiment is used, the number of reduced services has been 26. On the other hand, in the method for replacing with the single transportation, the number of reduced services has been six. Furthermore, in a case where the number of target trucks in the executable solution is 77 in the problem setting #3 and the information processing device 1 according to the present embodiment is used, the number of reduced services has been 20. On the other hand, in the method for replacing with the single transportation, the number of reduced services has been 20. Furthermore, in a case where the number of target trucks in the executable solution is 104 in the problem setting #4 and the information processing device 1 according to the present embodiment is used, the number of reduced services has been 50. On the other hand, in the method for replacing with the single transportation, the number of reduced services has been 32. Furthermore, in a case where the number of target trucks in the executable solution is 178 in the problem setting #5 and the information processing device 1 according to the present embodiment is used, the number of reduced services has been 13. On the other hand, in the method for replacing with the single transportation, the number of reduced services has been two.

In this way, in a case where the package to be delivered by the service reduction target truck is allocated to the another truck, it can be confirmed that the information processing device 1 that performs allocation using the relay transportation has a performance equal to or higher than a performance in a case of the same service reduction, as compared with a method for replacing with the single transportation.

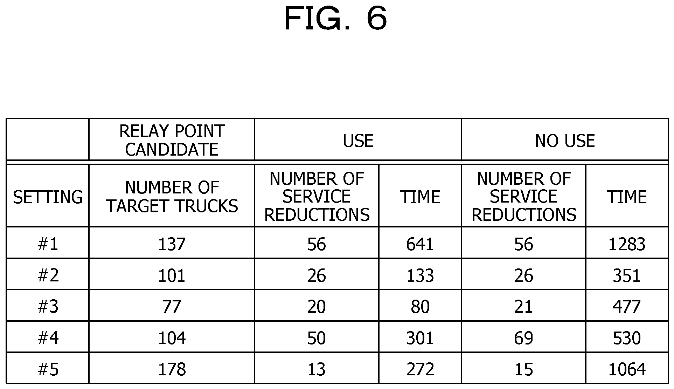

FIG. 6 is a diagram illustrating an effect of narrowing in a case where the relay candidate table is used. In FIG. 6, use of a relay point candidate indicates a result in a case where the relay candidate table 140 is used, and no use indicates a result in a case where the relay candidate table 140 is not used. The time in FIG. 6 represents an elapsed time until final determination of the service reduction. In this case, the numerical experiments have been performed using the problem settings #1 to #5 as in FIG. 5.

In the problem setting #1, the number of service reductions in a case where the relay candidate table 140 is used is 56 and a time is 641 seconds, whereas the number of service reductions in a case where the relay candidate table 140 is not used is 56 and the time is 1283 seconds. Furthermore, in the problem setting #2, the number of service reductions in a case where the relay candidate table 140 is used is 26 and a time is 133 seconds, whereas the number of service reductions in a case where the relay candidate table 140 is not used is 26 and the time is 351 seconds. Furthermore, in the problem setting #3, the number of service reductions in a case where the relay candidate table 140 is used is 20 and a time is 80 seconds, whereas the number of service reductions in a case where the relay candidate table 140 is not used is 21 and the time is 477 seconds. Furthermore, in the problem setting #4, the number of service reductions in a case where the relay candidate table 140 is used is 50 and a time is 301 seconds, whereas the number of service reductions in a case where the relay candidate table 140 is not used is 69 and the time is 530 seconds. Furthermore, in the problem setting #5, the number of service reductions in a case where the relay candidate table 140 is used is 13 and a time is 272 seconds, whereas the number of service reductions in a case where the relay candidate table 140 is not used is 15 and the time is 1064 seconds.

In this way, in a case where the package to be delivered by the service reduction target truck is allocated to the relay transportation and the number of services is reduced, the information processing device 1 basically realizes a substantially equal service reductions, regardless of whether or not to use the relay candidate table 140. However, as in the problem setting #4, there is a case where a certain degree of difference in the number of service reductions occurs, by using the relay candidate table 140. Then, by using the relay candidate table 140, the information processing device 1 can reduce a solving time to about 1/6 to 1/2 while securing the same or higher performance with respect to the service reduction.

As described above, the information processing device according to the present embodiment divides the single delivery route of the package to be delivered by the predetermined truck into the two or more delivery routes and allocates the delivery of the package in each of respective delivery routes to the another truck so as to perform the replacement with the relay transportation. As a result, it is possible to easily and appropriately determine the service reduction by the relay transportation, and it is possible to realize efficient delivery.

Furthermore, although the single transportation is replaced with the relay transportation and the service reduction is performed in the present embodiment, the packages can be distributed by replacing the single transportation with the relay transportation by the another truck, for some packages of the truck having a large loading amount of the packages. With such use, the information processing device according to the present embodiment can contribute to leveling of the maximum loading amount of the truck.

### (Hardware Configuration)

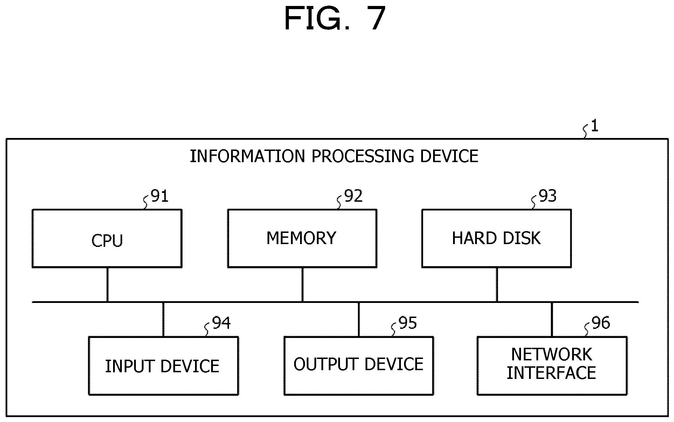

FIG. 7 is a hardware configuration diagram of the information processing device. Next, an example of a hardware configuration for implementing each function of the information processing device 1 will be described with reference to FIG. 7.

As illustrated in FIG. 7, for example, the information processing device 1 includes a central processing unit (CPU) 91, a memory 92, a hard disk 93, an input device 94, an output device 95, and a network interface 96. The CPU 91 is coupled to the memory 92, the hard disk 93, the input device 94, the output device 95, and the network interface 96 via a bus.

The input device 94 is, for example, a keyboard, a mouse, or the like. The input device 94 implements functions of the input unit 11 illustrated in FIG. 1. The output device 95 is, for example, a monitor or the like. The output device 95 implements functions of the output unit 13 illustrated in FIG. 1.

The network interface 96 is an interface for communication between the information processing device 1 and an external device.

The hard disk 93 is an auxiliary storage device. The hard disk 93 implements functions of the data storage unit 15 illustrated in FIG. 1. Furthermore, the hard disk 93 stores various programs including a program for implementing functions of the service reduction processing unit 12 and the relay candidate table creation unit 14.

The memory 92 is a main storage device. For example, a dynamic random access memory (DRAM) may be used as the memory 92.

The CPU 91 reads various programs from the hard disk 93, and loads the programs in the memory 92 to execute the programs. As a result, the CPU 91 implements the functions of the service reduction processing unit 12 and the relay candidate table creation unit 14 illustrated in FIG. 1.

## Claims

1. An information processing program comprising instructions which, when executed by a computer, cause the computer to execute processing comprising:
specifying a package to be delivered by a first moving body from a first base to a second base in a first delivery plan;
specifying a third base other than the first base and the second base and where delivery of the package from the first base to the third base is allocatable to a second moving body included in the first delivery plan and where delivery of the package from the third base to the second base is allocatable to a third moving body included in the first delivery plan; and
creating a second delivery plan by replacing the delivery of the package from the first base to the second base by the first moving body with the delivery of the package from the first base to the third base by the second moving body and the delivery of the package from the third base to the second base by the third moving body.

2. The information processing program according to claim 1, the processing further comprising:
generating a list that indicates candidates of the third base, wherein
the processing of specifying the third base includes
processing of specifying the third base where the delivery of the package from the first base to the third base is allocatable to the second moving body and the delivery of the package from the third base to the second base is allocatable to the third moving body, from among the candidates registered in the list.

3. The information processing program according to claim 1, wherein
in a case where there is a plurality of the packages to be delivered by the first moving body,
the specifying of the third base includes processing of specifying the third base for each package, and
the creating of the second delivery plan replaces the delivery for each package.

4. The information processing program according to claim 1, wherein
the specifying of the third base uses:
the second moving body that includes at least the first base or the third base or a combination of the first base and the third base in a delivery route in the first delivery plan, and
the third moving body that includes at least the third base or the second base or a combination of the third base and the second base in a delivery route in the first delivery plan.

5. An information processing method implemented by a computer, the information processing method comprising:
specifying a package to be delivered by a first moving body from a first base to a second base in a first delivery plan;
specifying a third base other than the first base and the second base and where delivery of the package from the first base to the third base is allocatable to a second moving body included in the first delivery plan and where delivery of the package from the third base to the second base is allocatable to a third moving body included in the first delivery plan; and
creating a second delivery plan by replacing the delivery of the package from the first base to the second base by the first moving body with the delivery of the package from the first base to the third base by the second moving body and the delivery of the package from the third base to the second base by the third moving body.

6. An information processing device comprising:
a service reduction processing unit configured to perform processing including:
specifying a package to be delivered by a first moving body from a first base to a second base in a first delivery plan;
specifying a third base other than the first base and the second base and where delivery of the package from the first base to the third base is allocatable to a second moving body included in the first delivery plan and where delivery of the package from the third base to the second base is allocatable to a third moving body included in the first delivery plan; and
creating a second delivery plan by replacing the delivery of the package from the first base to the second base by the first moving body with the delivery of the package from the first base to the third base by the second moving body and the delivery of the package from the third base to the second base by the third moving body, and
an output unit configured to output the second delivery plan created by the service reduction processing unit.
